# EUROPÄISCHE PATENTSCHRIFT

(11) **EP 0 793 556 B1**
(45) Veröffentlichungstag und Bekanntmachung des Hinweises auf die Patenterteilung: **12.08.1998**
(21) Anmeldenummer: 95931909.6
(22) Anmeldetag: 21.09.1995
(51) Int. Cl.: B23B 41/04

(54) **FEINBOHRMASCHINE ZUR ERZEUGUNG UNRUNDER BOHRUNGEN**
PRECISION DRILL FOR DRILLING NONCIRCULAR BORES
PERCEUSE DE PRECISION POUR EFFECTUER DES ALESAGES EN FAUX-ROND

(30) Priorität: 26.11.1994 DE 4442218
(43) Veröffentlichungstag der Anmeldung: 10.09.1997
(73) Patentinhaber: MAHLE GMBH, D-70376 Stuttgart (DE)
(72) Erfinder: BATHEN, Roland, D-71287 Weissach (DE)
(86) Internationale Anmeldenummer: DE9501315
(87) Internationale Veröffentlichungsnummer: WO9616762

(56) Entgegenhaltungen:
- DE-U- 9 106 682
- DE-U- 9 211 772
- PATENT ABSTRACTS OF JAPAN vol. 11, no. 278 (M-623) 13. April 1987 & JP,A,62 079 901 (NIPPEI TOYAMMA) 4. Oktober 1985
- PATENT ABSTRACTS OF JAPAN vol. 11, no. 278 (M-623) 13. April 1987 & JP,A,62 079 902 (NIPPEI TOYAMMA) 4. Oktober 1985
- PATENT ABSTRACTS OF JAPAN vol. 11, no. 278 (M-623) 13. April 1987 & JP,A,62 079 903 (NIPPEI TOYAMMA) 4. Oktober 1985

## Beschreibung

Die Erfindung betrifft eine Feinbohrmaschine zur Erzeugung unrunder Bohrungen nach dem Oberbegriff des Patentanspruchs 1.

Derartige Feinbohrmaschinen sind beispielsweise aus DE 38 18 827 C, EP 0 430 984 B, DE 43 12 937 A und Patent Abstracts of Japan, Vol.11, no.278 (M-623), 13.April 1987 & JP-A-62 079 901 (NIPPEI TOYAMMA), 4.October 1985, bekannt.

Bei diesen Einrichtungen wird jeweils die Bohrspindel mit dem Drehmeißel bzw. lediglich der Bohrmeißel während des Bohrens der zu erzeugenden Bohrungsform entsprechend periodisch ausgelenkt. Mit diesen Einrichtungen können praktisch beliebige Formen von Bohrungen erzielt werden. Begrenzt ist eine beliebige Bohrungsform lediglich durch die technisch mögliche Bewegungsdynamik der Bohrspindel bzw. der Bohrmeißellagerung.

Einrichtungen, bei denen die Bohrspindel bzw. der gesamte Bohrkopf verstellt wird, erlauben wegen der zu bewegenden relativ großen Massen nur relativ geringe Drehzahlen.

Mit vergleichsweise höheren Drehzahlen können Einrichtungen arbeiten, bei denen lediglich eine Lagerung des Bohrmeißels innerhalb des Bohrkopfes ausgelenkt wird. In dem zuletzt genannten Fall besitzt die Lagerung des Bohrmeißels jedoch nur eine relativ geringe Steifigkeit, wodurch die Bearbeitungsqualität leidet.

Von dem vorstehend geschilderten Sachverhalt ausgehend beschäftigt sich die Erfindung mit dem Problem, unrunde Bohrungen mit hoher Bearbeitungsqualität und mit für einen wirtschaftlichen Einsatz notwendigen hohen Drehzahlen besser und kostengünstiger als bisher herzustellen.

Gelöst wird dieses Problem durch eine Ausführung mit den kennzeichnenden Merkmalen des Patentanspruchs 1.

Bei dieser Lösung wird abweichend von dem bisherigen Stand der Technik das Werkstück und nicht der Bohrmeißel bzw. dessen Lagerung oder die Spindel zur Erzeugung einer Bohrungsunrundform periodisch ausgelenkt. Hierdurch ergibt sich eine Vereinfachung dadurch, daß die periodische Auslenkbewegung nicht einer Rotationsbewegung überlagert werden muß, sondern die einzige Bewegungsform für dieses Teil ist.

Besonders geeignet ist die erfindungsgemäße Einrichtung zur Herstellung von Bohrungen mit einer ovalen Rundform. In diesem Fall muß das Werkstück nämlich bei einer Bohrmeißelumdrehung lediglich eine Bewegungsperiode durchlaufen. Dies wird später anhand eines Diagrammes noch näher erläutert werden. Bei einer Auslenkung des Bohrmeißels müßte dieser dagegen während einer Umdrehung zwei Perioden, d.h. die doppelte Anzahl, durchlaufen, wodurch die Bearbeitungsdrehzahl mit Rücksicht auf Grenzen bei der Bewegungsdynamik in wirtschaftlich ungünstig niedrigen Bereichen gehalten werden muß. Zur Erzielung einer Bohrung mit ovaler Grundform, bei der bis auf den Umfangsbereich, durch den die lange Ovalachse verläuft, praktisch beliebige Oval-Unrundformen erreichbar sind, muß das Werkzeug lediglich in einer Richtung translatorisch schwingen.

Nach Anspruch 2 wird die Auslenkung des Werkstückes nach der jeweiligen Ist-Position des Bohrmeißels gesteuert, indem jeder Ist-Position ein bestimmter Auslenkwert in einem beispielsweise elektronischen Speicher zugeordnet ist, der der Auslenkeinrichtung des Werkstückes jeweils als Stellgröße aufgegeben wird. Darüber hinaus wird zweckmäßigerweise auch die jeweilige tatsächliche Ist-Lage des Werkstückes noch durch einen Lageregelkreis mit berücksichtigt.

Für den Fall, daß die Bohrungen in Längsrichtung zusätzlich einen konischen Verlauf besitzen sollen, kann die Bohrspindel auslenkbar gelagert sein. Geeignete Einrichtungen für eine solche Auslenkbarkeit sind an sich bekannt.

Prinzipdarstellungen zum besseren Verständnis der Erfindung sind in der Zeichnung dargestellt.

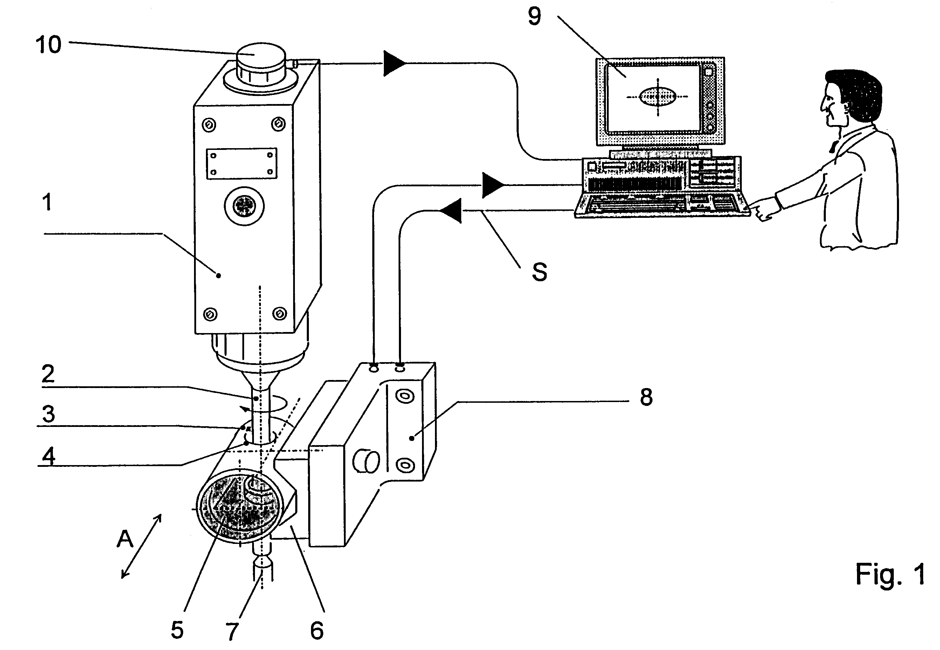

Es zeigen
- Fig. 1: eine schematisch, perspektivische Darstellung einer erfindungsgemäßen Einrichtung
- Fig. 2: eine Prinzipdarstellung der Bewegungsabläufe des Bohrmeißels und eines von diesem bearbeiteten Werkstückes.

Bei einer Feinbohrmaschine 1 rotiert ein fest an einer Spindel 2 befestigter Bohrmeißel 3 auf einer kreisrunden Bearbeitungsbahn in der Bohrung 4 eines als Werkstück 5 dienenden Kolbens.

Das Werkstück 5 ist in einem Halter 6 fest eingespannt.

Die Spindel 2 ist in einer Spitze 7 gegengelagert. Hierdurch wird eine hohe Steifigkeit der Spindel erreicht.

Der Halter 6 ist in Richtung des Doppelpfeiles A schwingbar in einer ortsfesten Aufnahme 8 gelagert.

Die Schwingbewegung des Halters 6 wird wie folgt gesteuert.

In einem elektronischen Speicher 9 ist eine zu erzeugende Bohrungsform derart abgespeichert, daß jeder Ist-Position des Bohrmeißels ein entsprechender Auslenkwert für die Schwingbewegung des Halters zugeordnet ist. Damit muß im Grunde lediglich die jeweilige Ist-Position des rotierenden Bohrmeißels 3 durch einen mit der Spindel 2 synchron rotierenden Geber 10 erfaßt und dem Speicher 9 aufgegeben werden. Daraus leitet sich dann die Stellgröße für die Auslenkung des schwingenden Halters 6 ab, die einem Stellantrieb dieses Halters aufgegeben wird.

Mit der vorstehend beschriebenen Einrichtung können lediglich Bohrungsformen mit einer annähernd ovalen Grundform hergestellt werden, d.h. einer solchen Form, bei der die quer zur Bewegungsrichtung A des Halters 6 liegenden Umfangsbereiche bezogen auf ihren radialen Abstand zur Mittelachse der Spindel 2 nicht veränderbar sind. Diese Beschränkung kann dadurch aufgehoben werden, daß der Kalter zusätzlich noch in einer zu der mit dem Doppelpfeil A angegebenen Richtung senkrechten Richtung schwingt.

Zweckmäßigerweise wird der Kalter 6 nicht nur anhand der gemessenen Ist-Positionen des Bohrmeißels 3 und der diesen in dem Speicher 9 zugeordneten Auslenkungsstellwerten gesteuert, sondern mit Hilfe eines Lageregelkreises verstellt. Diese Lageregelkreisverstellung wird dadurch erreicht, daß auch die jeweilige Ist-Postion des Halters 6 dem elektronischen Speicher 9 gemeldet und dort mit der der jeweiligen Ist-Position des Bohrmeißels 3 zugeordneten Sollposition des Halters 6 verglichen wird. Die festgestellte Abweichung zu einer elektronisch vorgegebenen Bohrungsform wird dann zu einem Stellsignal für den Halter 6 verarbeitet.

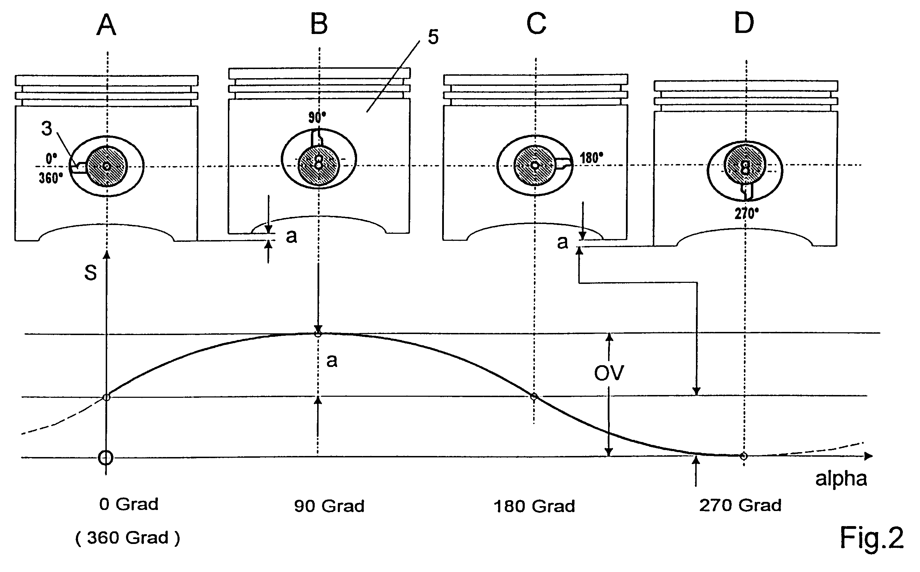

In Fig. 2 sind recht anschaulich die Bewegungsabläufe des Bohrmeißels 3 und des Werkstückes 5 dargestellt. In dem oberen Bereich dieser Figur sind die Werkstückpositionen bei jeweils um 90 Grad versetzten Positionen des Bohrmeißels 3 mit Bezug auf eine Dreiviertel-Umdrehung des Bohrmeißels 3 wiedergegeben. Diese Positionen sind mit A - D bezeichnet. Die größten Abweichungen von der Ausgangsposition A liegen in jeweils entgegengesetzten Richtungen bei den Positionen B und D vor. Diese Abweichungen sind jeweils mit a als Wegstrecke bezeichnet.

In dem unteren Teil der Fig. 2 ist die Schwingungsbahn des Werkstückes 5 in Abhängigkeit des Drehwinkels alpha des Bohrmeißels 3 wiedergegeben, wobei auf der Ordinate der Schwingweg S angegeben ist. Die den Positionen B und D entsprechenden Auslenkungen a des Werkstückes sind bei der Schwingbahn-Darstellung in vergrößerter Weise angegeben. Die Amplitude der Schwingungskurve, die mit OV bezeichnet ist, ist ein Maß für die Ovalität der Bohrung.

## Patentansprüche

1. Feinbohrmaschine mit einem Bohrmeißel an einer Bohrspindel und einem Halter für ein zu bearbeitendes Werkstück zur Erzeugung unrunder Bohrungen,
dadurch **gekennzeichnet,**
daß der Halter (6) für das Werkstück (5) in mindestens einer Richtung translatorisch mit einer von der jeweiligen Drehzahl des Bohrmeißels (3) bestimmten Frequenz und auf einer durch die zu erzeugende Bohrungsform bestimmten Auslenkungsbahn schwingt.

2. Feinbohrmaschine nach Anspruch 1,
dadurch **gekennzeichnet,**
daß die Auslenkung des Werkstückes (5) in Abhängigkeit der Ist-Positionen des Bohrmeißels (3) nach diesen Ist-Positionen zugeordneten, die Form der Bohrung bestimmenden Werten gesteuert wird.

3. Feinbohrmaschine nach Anspruch 2,
dadurch **gekennzeichnet,**
daß für eine präzise Auslenkung des Werkstückes (5) auch die jeweilige Ist-Position des Werkstückes (5) mit berücksichtigt wird.

4. Feinbohrmaschine nach einem der vorhergehenden Ansprüche,
dadurch **gekennzeichnet,**
daß der radiale Abstand des Bohrmeißels (3) von der Mittelachse der Spindel (2) während des Bohrbetriebes nach einem vorgegebenen Bewegungsschema zum Zweck der Beeinflussung des erzeugten Bohrungsdurchmessers vergrößert oder verkleinert werden kann.

## Claims

1. A precision drill with a bit on a drill spindle and a holder for a workpiece which is to be machined, the drill being adapted to produce non-circular bores, characterised in that the holder (6) for the workpiece (5) oscillates in at least one direction in a translatory sense at a frequency determined by the relevant rotary speed of the pick (3) and over a deflection path which is determined by the form of bore to be produced.

2. A precision drill according to claim 1, characterised in that the deflection of the workpiece (5) is controlled as a function of the actual positions of the drill bit (3) according to values associated with these actual positions and determining the form of the bore.

3. A precision drill according to claim 2, characterised in that also the respective actual position of the workpiece (5) is taken into account for a precise deflection of the workpiece (5).

4. A precision drill according to one of the preceding claims, characterised in that the radial distance between the drill bit (3) and the central axis of the spindle (2) can be increased or reduced during drill operation in accordance with a predetermined scheme of movement for the purpose of influencing the diameter of the bore to be produced.

## Revendications

1. Perceuse de précision avec un outil de perçage sur une broche de perçage et avec un support pour une pièce à usiner, en vue d'effectuer des alésages en faux-rond, caractérisée en ce que le support (6) pour la pièce (5) oscille en translation, dans une direction au moins, à une fréquence définie par la vitesse de rotation respective de l'outil de perçage (3) et sur une trajectoire de déviation définie par la forme d'alésage à produire.

2. Perceuse de précision suivant la revendication 1, caractérisée en ce que la déviation de la pièce (5) est commandée en fonction des valeurs associées aux positions effectives de l'outil de perçage (3), suivant ces positions, et définissant la forme de l'alésage.

3. Perceuse de précision suivant la revendication 2, caractérisée en ce que la position effective respective de la pièce (5) est également prise en compte pour une déviation précise de la pièce (5).

4. Perceuse de précision suivant l'une des revendications précédentes, caractérisée en ce que la distance radiale de l'outil de perçage (3) par rapport à l'axe médian de la broche (2) peut être augmentée ou réduite, pendant le perçage, d'après un schéma de mouvement prédéfini, en vue d'influer sur le diamètre d'alésage créé.
